# EUROPÄISCHE PATENTSCHRIFT

(11) **EP 0 785 838 B1**
(45) Veröffentlichungstag und Bekanntmachung des Hinweises auf die Patenterteilung: **06.05.1999**
(21) Anmeldenummer: 96927066.9
(22) Anmeldetag: 01.08.1996
(51) Int. Cl.: B23K 26/14

(54) **VORRICHTUNG ZUR SCHICHTWEISEN HERSTELLUNG EINES OBJEKTES MITTELS LASERSINTERN**
DEVICE FOR THE LAYERED PRODUCTION OF AN OBJECT BY LASER SINTERING
PROCEDE DE PRODUCTION D'UN OBJET EN COUCHE PAR FRITTAGE PAR LASER

(30) Priorität: 16.08.1995 DE 29513026 U
(43) Veröffentlichungstag der Anmeldung: 30.07.1997
(73) Patentinhaber: EOS GmbH ELECTRO OPTICAL SYSTEMS, 82152 Planegg (DE)
(72) Erfinder: MATTES, Thomas, 82229 Hechendorf (DE); WILKENING, Christian, 86911 Diessen/Ammersee (DE)
(74) Vertreter: Prüfer, Lutz H., Dipl.-Phys.
(86) Internationale Anmeldenummer: EP9603382
(87) Internationale Veröffentlichungsnummer: WO9706918

(56) Entgegenhaltungen:
- WO-A-87/07862
- WO-A-88/02677
- FR-A- 1 564 933

## Beschreibung

Die vorliegende Erfindung bezieht sich auf eine Vorrichtung zur schichtweisen Herstellung eines Objektes mittels Lasersintern.

Es ist der Anmelderin eine Vorrichtung zur schichtweisen Herstellung eines Objektes mittels Lasersintern mit einem Träger zum Positionieren des Objektes relativ zu einer Arbeitsoberfläche und einer Vorrichtung zum Aufbringen eines durch elektromagnetische Strahlung verfestigbaren Pulvers bekannt. Die Vorrichtung weist weiter einen Laser auf. Der durch den Laser erzeugte Laserstrahl wird durch eine Fokussiervorrichtung mit einer Linse auf einen Punkt in der Arbeitsoberfläche fokussiert und verfestigt das Pulver. Insbesonders bei der Verwendung von Polyamid als Pulver entweichen dabei Monomere aus dem Pulver, die sich auf der Linse niederschlagen und so die Transparenz dieser im Laufe des Bauprozesses immer weiter verringern. Dies führt dazu, daß der Laserstrahl immer mehr absorbiert wird, wodurch seine Intensität in der Arbeitsoberfläche absinkt. Aufgrund der sinkenden Intensität vermindert sich die Qualität des zu bildenden Objektes. Um dies zu verhindern, ist vor der Linse ein Schutzglas angeordnet, daß aus mehreren Düsen mit Stickstoff angeblasen wird. Da jedoch das Schutzglas nur teilweise mit Stickstoff überströmt wird und da zwischen den Düsen keine Strömung anliegt, schlagen sich an diesen Stellen die Monomere nieder. Daher muß das Schutzglas nach jedem Bauprozess eines Objektes entnommen und gereinigt werden.

Aus der WO 87/07862 ist ein Plasmabrenner mit einem Laser zum Erzeugen eines Laserstrahles und einer Fokussiervorrichtung zum Fokussieren des Laserstrahles bekannt. Die Fokussiervorrichtung weist eine Linse und eine die Linse tragende Fassung auf. Weiterhin ist eine Ringdüse an der von dem Laser wegweisenden Seite der Linse vorgesehen, die eingangsseitig mit einer Quelle eines unter Druck stehenden Gases abschaltbar verbunden ist.

Aus der JP 5-77081 ist eine Laserbearbeitungseinrichtung bekannt, bei der eine Vorrichtung zum Richten eines Gasstromes gegen eine Spiegel bzw. eine Linse zum Kühlen und Staubentfernen vorgesehen ist. Das Gas wird aus einer Mehrzahl von in Umfangsrichtung um die Linse angeordneten voneinander gleichmäßig beabstandeten Austrittsöffnungen über die Linsenoberfläche geleitet.

Aus der JP 62-224489 ist eine Vorrichtung zum Kühlen und Staubentfernen von einer Linse für eine Laserbearbeitungseinrichtung bekannt. Kühlgas tritt aus einer Lufttasche unter einem Winkel auf die Linsenoberfläche auf.

Aufgabe der Erfindung ist es, eine Vorrichtung zur schichtweisen Herstellung eines Objektes mittels Lasersintern eines Pulvermaterials zur Verfügung zu stellen, bei der die Fokussiereinheit effektiv gegen sich auf der Linse niederschlagenden Monomeren des zu sinternden Pulvers geschnitzt ist.

Die Aufgabe wird durch die in Anspruch 1 gekennzeichnete Vorrichtung gelöst.

Die im Anspruch 1 gekennzeichnete Vorrichtung weist den Vorteil auf, daß der durch die Ringdüse eingeblasene Stickstoff die gesamte zur Arbeitsebene weisende Linsenoberfläche überströmt. Da der Stickstoff tangential zur Linsenoberfläche eingeblasen wird, entsteht eine von der Außenseite der Linse zur Mitte der Linse und von dort zur Arbeitsebene hin gerichtete Strömung. Diese Strömung verhindert effektiv, daß sich Monomere auf der Linsenoberfläche niederschlagen. Die Linse muß deshalb wesentlich seltener gereinigt werden.

Weitere Merkmale und Zweckmäßigkeiten der Erfindung ergeben sich aus der Beschreibung des Ausführungsbeispieles anhand der Figuren. Von den Figuren zeigen
- Fig.1: ein schematisches Blockdiagramm der Vorrichtung; sowie
- Fig.2: eine Querschnittsansicht der Ringdüse.

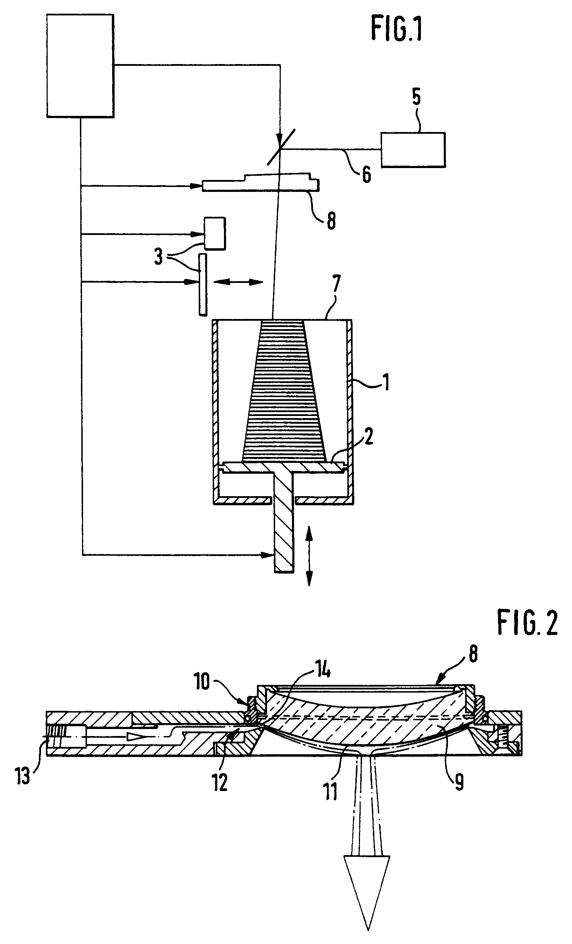

Wie in Fig.1 gezeigt ist, weist die Vorrichtung zur schichtweisen Herstellung eines Objektes einen in einem oben offenen Behälter 1 in vertikaler Richtung bewegbaren Träger 2 auf, der das zu bildende Objekt trägt. Der Träger 2 wird in vertikaler Richtung so eingestellt, daß die jeweils zu verfestigende Schicht des Objekts in einer Arbeitsebene 7 liegt. Weiter ist eine Aufbringvorrichtung 3 zum Aufbringen des durch elektromagnetische Strahlung verfestigbaren pulverförmigen Aufbaumaterials vorgesehen. Die Vorrichtung weist einen Laser 5 auf. Der durch den Laser 5 erzeugte Laserstrahl 6 wird durch eine Fokusiervorrichtung 8 in einem vorbestimmten Punkt in der Arbeitsebene 7 fokussiert.

Wie in Fig. 2 gezeigt ist, weist die Fokusiervorrichtung 8 eine Linse 9 und eine die Linse 9 tragende Fassung 10 auf. Die Linse 9 weist eine der Arbeitsebene 7 zugewandte bildseitige Oberfläche 11 auf. In der Fassung 10 ist eine Ringdüse 12 mit einen eingangsseitigen Anschluß 13 vorgesehen. Ein Behälter mit einem unter Druck stehendem Gas ist über ein Ventil mit dem eingangsseitigen Anschluß 13 verbunden. Als Gas wird bevorzugt Stickstoff verwendet. Die Ringdüse 12 ist in der Fassung 10 angrenzend an die bildseitige Oberfläche 11 angeordnet. Die ausgangsseitige Düsenöffnung 14 ist so relativ zur bildseitigen Oberfläche 11 gerichtet ist, daß der austretende Gasstrom tangential zur bildseitigen Oberfläche entlangstreicht.

Im Betrieb wird das Ventil geöffnet, so daß der Stickstoff durch den eingangsseitigen Anschluß 13 in die Ringdüse 12 einströmt und durch die ausgangsseitge Düsenöffnung 14 hinausströmt. Das ausströmende Gas streicht tangential zur bildseitigen Oberfläche 11 über die gesamte bildseitigen Oberfläche 11 der Linse 9. Das Gas strömt radial zur Mitte der Linse 9 und von dort in Richtung zur Arbeitsebene 7 hin, so daß sich keine beim Verfestigen des Pulvers entstehende Monomere auf der Linse 9 niederschlagen können.

## Patentansprüche

1. Vorrichtung zur schichtweisen Herstellung eines Objektes mittels Lasersintern durch Verfestigen eines durch elektromagnetische Strahlung verfestigbaren Materials mit einem höhenverstellbaren Träger (2), einer Aufbringvorrichtung (3) zum Aufbringen des Materials auf den Träger (2) bzw. die zu vor verfestigte Schicht, einer Vorrichtung (5) zum Erzeugen eines Laserstrahls (6) und einer Fokussiervorrichtung (8) zum Fokussieren des Strahls (6) auf das aufgebrachte Material in einer Arbeitsebene (7), wobei die Fokussiervorrichtung (8) eine Linse (9) und eine die Linse (9) tragende Fassung (10),
eine angrenzend an die der Arbeitsebene (7) zugewandte bildseitige Oberfläche (11) der Linse (9) angeordnete Ringdüse (12), die ausgangsseitig so relativ zur bildseitigen Oberfläche (11) gerichtet ist, daß ein austretender Strom tangential an der bildseitigen Oberfläche (11) zur Mitte hin entlangstreicht, und die eingangsseitig mit einer Quelle eines unter Druck stehenden Gases abschaltbar verbunden ist, aufweist.

## Claims

1. Apparatus for the layerwise production of an object by means of laser sintering by solidifying a material solidifiable by electromagnetic radiation, having a height-adjustable carrier (2), a depositing device (3) for depositing the material onto the carrier (2) or the previously solidified layer, a device (5) for generating a laser beam (6) and a focusing device (8) for focusing the beam (6) onto the deposited material in a working plane (7), the focusing device (8) having a lens (9) and a mounting (10) carrying the lens (9),
an annular nozzle (12) which is arranged adjacent to the image-side surface (11) of the lens (9) facing the working plane (7) and which, on the outlet side, is directed in such a way relative to the image-side surface (11) that an emerging flow sweeps tangentially along the image-side surface (11) towards the centre and, on the inlet side, is interruptibly connected to a pressurized gas source.

## Revendications

1. Dispositif de production couche par couche d'un objet, à l'aide d'un procédé de frittage par laser avec durcissement d'un matériau durcissable sous l'effet d'un rayonnement électromagnétique, comprenant un support (2) réglable en hauteur, un dispositif de versement (3) destiné à déposer le matériau sur le support (2) ou sur la couche précédemment durcie, un dispositif (5) destiné à produire un rayon laser (6) et un dispositif de focalisation (8) destiné à focaliser le rayon (6) sur le matériau déposé sur un plan de travail (7), dans lequel dispositif le dispositif de focalisation (8) comporte une lentille (9) et une monture (10) portant la lentille (9), une buse concentrique (12) contiguë à la surface postérieure (11) de la lentille (9) orientée vers le plan de travail (7), laquelle buse concentrique est orientée du côté de la sortie par rapport à la surface postérieure (11) de telle sorte qu'un flux sortant est dirigé tangentiellement le long de la surface postérieure (11) vers le milieu, et laquelle buse concentrique est reliée du côté de l'entrée avec une source de gaz sous pression, à ouverture et fermeture réglables.
